# EUROPEAN PATENT APPLICATION

(11) **EP 1 724 108 A1**
(43) Date of publication of application: **22.11.2006**
(21) Application number: 06252612.4
(22) Date of filing: 19.05.2006
(51) Int. Cl.: B32B 27/08, B32B 27/32, B32B 27/34, B32B 29/00, B65D 65/40, B65D 5/40, B65D 5/56

(54) **Gas barrier packaging board**

(30) Priority: 20.05.2005 US 133693
(71) Applicant: WEYERHAEUSER COMPANY, Federal Way, WA 98063-9777 (US)
(72) Inventor: Shearer, Dwayne M., Seattle, Washington 98105 (US); Fox, George M., Longview, Washington 98632 (US)
(74) Representative: Bayliss, Geoffrey Cyril

(57) **Abstract**

A paperboard structure (12) having gas barrier properties which is cost effective and durable. The structure includes a layer (14) of a linear low density polyethylene, metallocene-based linear low density polyethylene, and a blend of low density polyethylene and either linear low density polyethylene or metallocene-catalyzed linear low density polyethylene..

## Description

The field is packaging board. More specifically it is a packaging board that may be formed into cartons and cups and has gas barrier properties.

The need for a gas barrier in paperboard packages is well known and there have been many solutions to reduce gas transfer through the paperboard. The amount and rate of gas transfer will depend on the type of barrier layer or layers that is used. The gas barrier layer is either laminated, extruded or co-extruded onto the paperboard to provide a board with gas barrier properties.

There are other factors that enter into the choice of a barrier material. Cost is a factor, both in the type and cost of the barrier material being used and also in the amount required to obtain the necessary barrier properties. Other important factors are carton durability and plastic char. Nylon in direct contact with an extruder die lip generates char, pyrolyzed nylon, and this char must be removed periodically to prevent contamination of the board. Char removal requires shutting down the extruder. The amount of barrier material required is also dependent on the uniformity of the barrier layer in both the machine direction and cross machine direction. Poor uniformity yields thick and thin spots which will change the gas barrier level. The type of material will also determine the amount of power required to extrude the material and therefore is a factor in the total cost of the packaging board.

Another factor is the adhesion of the material to the paperboard. Some materials adhere better than others. Some materials, such as nylon, require special board surface treatment to obtain adhesion to the paperboard. This also is reflected in the cost.

There is the problem of surface toughness. The surface layers should be tough and not abrade. The layers next to the paperboard should also be tough.

Extrusion or co-extrusion is a faster, lower cost process than lamination. The cost of a laminate film and associated handling is also avoided.

The present invention is directed to a barrier structure which is cost effective, provides a gas barrier and is durable.

The invention provides a paperboard with gas barrier properties comprising paperboard having a first surface and a second surface opposite said first surface, a first polyolefin layer having a first surface and a second surface opposite said first surface, said first layer first surface being applied directly to said second surface of said paperboard, a first tie layer having a first surface and a second surface opposite said first surface, said first tie layer first surface being applied directly to said second surface of said first polyolefin layer, an nylon layer having a first surface and a second surface opposite said first surface, said nylon layer first surface being applied directly to said second surface of said first tie layer second surface, a second tie layer having a first surface and a second surface opposite said first surface, said second tie layer first surface being applied directly to said second surface of said nylon layer, and a second polyolefin layer having a first surface and a second surface opposite said first surface, said first surface being applied directly to said tie layer first surface, said first and second polyolefin layers being selected from one of linear low density polyethylene, metallocene-catalyzed linear low density polyethylene, and a blend of low density polyethylene and either linear low density polyethylene or metallocene-catalyzed linear low density polyethylene.

The following is a description of some specific embodiments of the invention, reference being made to the accompanying drawings in which:

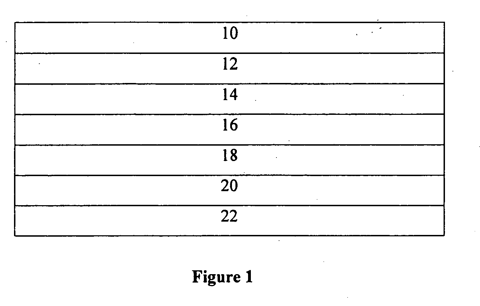

Figure 1 is a cross-sectional view of the board.

The paperboard 12 has a first side and a second side opposite the first side. The paperboard would have a weight of 200 to 500 grams per square meter (g/ m²).

A layer 10 is applied to the outer or second surface of the paperboard 12. The layer 10 is linear low density polyethylene (LLDPE) or metallocene-catalyzed linear low density polyethylene (mLLDPE) or a blend of low density polyethylene and LLDPE or mLLDPE. It provides a tough surface and a good print surface. It is applied in amounts ranging from 15 to 25 grams per square meter g/m².

A polyolefin layer 14 is applied directly to the inner or first surface of the paperboard 12. The polyolefin layer 10 has a first side and a second side and a second side opposite the first side. The first side is applied directly to the first side of the paperboard. The polyolefin layer 14 is linear low density polyethylene or metallocene-catalyzed linear low density polyethylene or a blend of low density polyethylene and linear low density polyethylene or metallocene-catalyzed linear low density polyethylene. It provides good adhesion to the paperboard without special treatment. It also minimizes the exposure of the nylon to the die lip during an extrusion or co-extrusion process. Die lip contact leads to char which causes waste and downtime. Linear low density polyethylene, metallocene-catalyzed linear low density polyethylene or a blend of low density polyethylene and either linear low density polyethylene or metallocene-catalyzed linear low density polyethylene provide durability. The amount of polyethylene may range from 4 to 25 grams per square meter.

A first tie layer 16 is applied directly to the polyolefin layer 14. The first tie layer has a first side and a second side opposite the first side. The first side of the tie layer is applied directly to the second side of layer 14. The first tie layer may be any appropriate adhesive resin. A typical adhesive resin is a maleic anhydride modified polyethylene resin. Other adhesive resins may be used. The usual amount of tie resin would be 3 to 9 grams per square meter.

A polyamide layer 18 is applied directly to the first tie layer 16. The polyamide layer has a first side and a second side opposite the first side. The first side of the polyamide layer is applied directly to the second side of tie layer 16. The polyamide gas barrier layer 18 may be an aliphatic such as nylon 6, nylon 66, nylon 6/66, nylon 6/9, nylon 6/10, nylon 11 and nylon 12, an aromatic nylon such as MXD6, a blend of aliphatic and aromatic nylons or a copolymer of aromatic and aliphatic nylons. The amount of polyamide ranges from 5 to 15 grams per square meter. The amount will determine the gas barrier property.

A second tie layer 20 is applied directly to the polyamide layer 18. The second tie layer has a first side and a second side opposite the first side. The first side of the second tie layer is applied directly to the second side of the layer 18. The second tie layer may be any appropriate adhesive resin. A typical adhesive resin is a maleic anhydride modified polyethylene resin. Other adhesive resins may be used. The usual amount of tie resin would be 3 to 9 grams per square meter.

An inner polyolefin layer 22 is applied directly to the tie layer 20. The polyolefin layer 22 has a first side and a second side and a second side opposite the first side. The first side is applied directly to the second side of the tie layer 20. The polyolefin layer 22 is linear low density polyethylene or metallocene-catalyzed linear low density polyethylene or a blend of low density polyethylene and linear low density polyethylene or metallocene-catalyzed linear low density polyethylene. It minimizes the exposure of the nylon to oxygen during an extrusion or co-extrusion process. Linear low density polyethylene, metallocene-catalyzed linear low density polyethylene or a blend of low density polyethylene and either linear low density polyethylene or metallocene-catalyzed linear low density polyethylene provide durability. The amount of polyethylene may range from 12 to 25 grams per square meter

One example of a barrier coated paperboard, using Figure 1 as an example, would be a board having a 16 g/m²outer linear low density polyethylene layer 10 applied to the outer surface of the paperboard 12. The first side of an 11 g/m² linear low density polyethylene layer 14 is applied directly to the first side of the paperboard 12. The first side of a 5 g/m² Bynel® first tie layer 16 is applied directly to the second side of layer 14. The first side of a 6 g/m² nylon layer 18 is applied directly to the second side of layer 16. The first side of a 5 g/m² Bynel® second tie layer 20 is applied directly to the second side of layer 18. The first side of inner 15 g/m² linear low density polyethylene product contacting layer 22 is applied directly to the second side of layer 20.

A second example of a barrier coated paperboard, again using Figure 1 as an example, would be a board having a 16 g/m²outer linear low density polyethylene layer 10 applied to the outer surface of the paperboard 12. The first side of a 16 g/m² linear low density polyethylene layer 14 is applied directly to the first side of the paperboard 12. The first side of an 8 g/m² Bynel® first tie layer 16 is applied directly to the second side of layer 14. The first side of a 6 g/m² nylon layer 18 is applied directly to the second side of layer 16. The first side of a 5 g/m² Bynel® second tie layer 20 is applied directly to the second side of layer 18. The first side of inner 13 g/m² linear low density polyethylene product contacting layer 22 is applied directly to the second side of layer 20.

A third example of a barrier coated paperboard, again using Figure 1 as an example, would be a board having a 16 g/m²outer linear low density polyethylene layer 10 applied to the outer surface of the paperboard 12. The first side of a 5 g/m² linear low density polyethylene layer 14 is applied directly to the first side of the paperboard 12. The first side of a 5 g/m² Bynel® first tie layer 16 is applied directly to the second side of layer 14. The first side of a 7 g/m² nylon layer 18 is applied directly to the second side of layer 16. The first side of a 5 g/m² Bynel® second tie layer 20 is applied directly to the second side of layer 18. The first side of inner 24 g/m²linear low density polyethylene product contacting layer 22 is applied directly to the second side of layer 20.

A fourth example of a barrier coated paperboard, again using Figure 1 as an example, would be a board having a 16 g/m²outer linear low density polyethylene layer 10 applied to the outer surface of the paperboard 12. The first side of an 18 g/m² linear low density polyethylene layer 14 is applied directly to the first side of the paperboard 12. The first side of an 8 g/m² Bynel® first tie layer 16 is applied directly to the second side of layer 14. The first side of a 7 g/m² nylon layer 18 is applied directly to the second side of layer 16. The first side of a 5 g/m² Bynel® second tie layer 20 is applied directly to the second side of layer 18. The first side of inner 13 g/m² linear low density polyethylene product contacting layer 22 is applied directly to the second side of layer 20.

Although preferred embodiments of the invention have been described using specific terms, such description is for illustrative purposes only. The words used are words of description rather than of limitation. It is to be understood that changes and variations may be made by those of ordinary skill in the art without departing from the spirit or scope of the present invention, which is set forth in the following claims. The spirit and scope of the appended claims should not be limited to the description of the preferred versions contained herein.

## Claims

1. A paperboard with gas barrier properties comprising
paperboard having a first surface and a second surface opposite said first surface,
a first polyolefin layer having a first surface and a second surface opposite said first surface, said first layer first surface being applied directly to said second surface of said paperboard,
a first tie layer having a first surface and a second surface opposite said first surface, said first tie layer first surface being applied directly to said second surface of said first polyolefin layer,
an nylon layer having a first surface and a second surface opposite said first surface, said nylon layer first surface being applied directly to said second surface of said first tie layer second surface,
a second tie layer having a first surface and a second surface opposite said first surface, said second tie layer first surface being applied directly to said second surface of said nylon layer, and
a second polyolefin layer having a first surface and a second surface opposite said first surface, said first surface being applied directly to said tie layer first surface,
said first and second polyolefin layers being selected from one of linear low density polyethylene, metallocene-catalyzed linear low density polyethylene, and a blend of low density polyethylene and either linear low density polyethylene or metallocene-catalyzed linear low density polyethylene.

2. A paperboard as claimed in claim 1, wherein said first polyolefin layer, said first tie layer, said aliphatic nylon layer, said second tie layer and said second polyolefin layer are co-extruded.

3. A paperboard as claimed in claim 2, wherein said nylon is an aliphatic nylon.

4. A paperboard as claimed in claim 3, wherein said aliphatic nylon is at least one of nylon 6, nylon 66, nylon 6/66, nylon 6/9, nylon 6/10, nylon 11 and nylon 12.

5. A paperboard as claimed in any of claims 1 to 4, wherein said nylon is an aromatic nylon.

6. A paperboard as claimed in any of claims 1 to 5, wherein said nylon is a copolymer of an aromatic nylon and an aliphatic nylon.

7. A paperboard as claimed in any of claims 1 to 6, wherein said nylon is a blend of an aromatic nylon and an aliphatic nylon.
